# EUROPEAN PATENT SPECIFICATION

(11) **EP 1 814 662 B1**
(45) Date of publication and mention of the grant of the patent: **04.01.2017**
(21) Application number: 05795552.8
(22) Date of filing: 07.09.2005
(51) Int. Cl.: B01J 37/20, C10G 49/04, B01J 35/12, C10G 65/04, C10G 47/26, C10G 49/12, B01J 27/051, B01J 27/053, C10G 67/04

(54) **Process for the preparation of an active slurry catalyst**
Verfahren zur Vorbereitung eines aktiven slurry Katalysators
Procédé de préparation d'un catalyseur slurry actif

(30) Priority: 10.09.2004 US 938202
(43) Date of publication of application: 08.08.2007
(73) Proprietor: Chevron U.S.A. Inc., San Ramon, CA 94583 (US)
(72) Inventor: CHEN, Kaidong, Albany, CA 94706 (US); LEUNG, Pak, C., Lafayette, CA 94549 (US); REYNOLDS, Bruce, E., Martinez, CA 94553 (US)
(74) Representative: Nash, David Allan
(86) International application number: PCT/US2005/031902
(87) International publication number: WO 2006/031575

(56) References cited:
- WO-A1-01/60952
- US-A- 4 710 486
- US-A- 4 740 489
- US-A- 4 824 821
- US-A- 4 970 190
- US-A- 5 037 532
- US-A- 5 108 581
- US-A- 5 164 075
- US-A- 5 484 755

## Description

### FIELD OF THE INVENTION

The present invention relates to the preparation of slurry catalyst compositions useful in the processing of heavy oils. These oils are characterized by low hydrogen to carbon ratios and high carbon residues, asphaltenes, nitrogen, sulfur and metal contents.

### BACKGROUND OF THE INVENTION

Slurry catalyst compositions and means for their preparation are known in the refining arts. Some examples are discussed below.

U.S. Patent No. 4,710,486 discloses a process for the preparation of a dispersed Group VIB metal sulfide hydrocarbon oil hydroprocessing catalyst. Process steps include reacting aqueous ammonia and a Group VIB metal compound, such as molybdenum oxide or tungsten oxide, to form a water soluble oxygen-containing compound such as ammonium molybdate or tungstate.

U.S. Patent No. 4,970,190 discloses a process for the preparation of a dispersed Group VIB metal sulfide catalyst for use in hydrocarbon oil hydroprocessing. This catalyst is promoted with a Group VIII metal. Process steps include dissolving a Group VIB metal compound, such as molybdenum oxide or tungsten oxide, with ammonia to form a water soluble compound such as aqueous ammonium molybdate or ammonium tungstate.

U.S. Patent No. 5,164,075 and U.S. Patent No. 5,484,755, disclose processes for preparation of high activity slurry catalysts for hydroprocessing heavy hydrocarbon oils produced from Group VIB metal compounds. An aqueous mixture of the metal compound is sulfided with from greater than about 8 to about 14 standard cubic feet of hydrogen sulfide per pound of Group VIB metal (4.7 x 10⁻⁴ Nm³/g to 8.3 x 10⁻⁴ Nm³/g). These patents demonstrate a process of forming a slurry catalyst precursor and adding it to a heavy feed oil to form the active catalyst.

U.S. Patent No. 4,824,821 discloses a process for the preparation of a dispersed Group VIB metal sulfide catalyst which is promoted with a Group VIII metal for use in hydrocarbon oil hydroprocessing.

U.S. Patent No. 5,108,581 discloses a catalytic process for hydroconverting heavy hydrocarbonaceous feedstocks to lower boiling products.

These patents do not demonstrate the criticality of the oil viscosity in the formation of a highly active catalyst composition, nor the significance of using two distinctly different oils in forming such catalyst composition. In the inventions disclosed in these patents, the failure to form the oil and water emulsion or the slurry phase results in an inactive catalyst or a catalyst having low activity.

This invention discloses a new process for preparing a slurry catalyst composition that is highly active. This activity results from preparation of the catalyst using a process employing two hydrocarbon oils having appropriate viscosity ranges at 212°F (100°C). The first heavier oil is preferably a vacuum gas oil (VGO) and the second is preferably a light naphtha.

### SUMMARY OF THE INVENTION

This invention is directed to a process for preparing a slurry catalyst composition which is suitable for the hydroconversion of heavy oils comprising:
(a) mixing a Group VI B metal oxide and aqueous ammonia to form a Group VI metal compound aqueous mixture;
(b) sulfiding, in an initial reactor, the aqueous mixture of step (a) with a gas comprising hydrogen sulfide to a dosage greater than 8 SCF of hydrogen sulfide per pound of Group VI B metal (4.7 x 10⁻⁴ Nm³/g) to form a slurry;
(c) promoting the slurry with a Group VIII metal;
(d) in a first reaction zone mixing the slurry of step (c) with a first hydrocarbon oil under an inert atmosphere and in a high shear mode in the range from 100 RPM to 1600 RPM, the first hydrocarbon oil having a viscosity of from 2 cSt @ 212°F (2 mm².s⁻¹ @ 100°C) to 15 cSt @ 212°F (15 mm².s⁻¹ @ 100°C), to form Mixture X;
(e) combining Mixture X with hydrogen gas and a second hydrocarbon oil in a second reaction zone and mixing in a high shear mode in the range from 100 RPM to 1600 RPM, the second hydrocarbon oil having a boiling point in the range from 50°F (10°C) to 300°F (148.9°C) and having a lower viscosity than the first hydrocarbon oil; thereby forming an active catalyst composition admixed with the first hydrocarbon oil and the second hydrocarbon oil; and
(f) recovering the active catalyst composition by separation from the second hydrocarbon oil;
   wherein the conditions in the first reaction zone comprise a temperature in the range from at least 80°F (26.7°C) to 200°F (93.3°C), and a gauge pressure in the range from at least 100 psi to 3000 psi (0.69 - 20.7 Mpa);
   and wherein the conditions of the second reaction zone comprise a temperature in the range from at least 350°F (176.7°C) to 600°F (315.6°C), and a gauge pressure in the range from at least 1000 psi to 3500 psi (6.89 - 24.1 MPa);
   and wherein the ratio of the volume of the second oil to the first oil is greater than 1.

This new highly active slurry catalyst composition may be stored in an active and concentrated state. The catalyst composition can be directly introduced into any of the known heavy oil or residuum upgrading processes under the existing conditions of that process. The catalyst can upgrade the very high viscosity carbonaceous and/or highly paraffinic feedstocks with or without dilution of the feedstock.

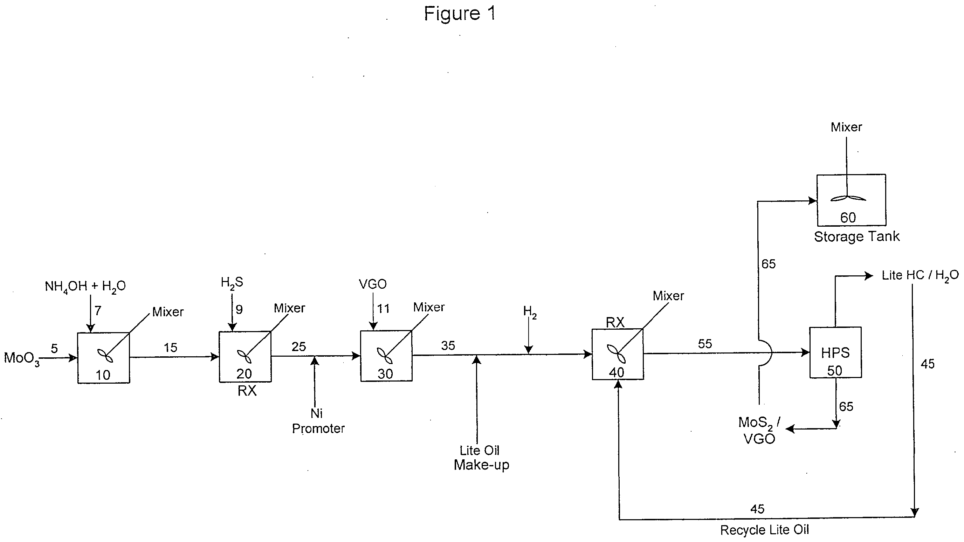

### BRIEF DESCRIPTION OF THE DRAWING

The Figure illustrates the steps involved in the preparation of the catalyst composition.

### DETAILED DESCRIPTION OF THE INVENTION

This invention relates to a highly active slurry catalyst composition formed from the addition of a first hydrocarbon oil having a viscosity of at least 2 cSt (or 32.8 SSU) @ 212°F (2 mm².s⁻¹ @ 100°C), and a second hydrocarbon oil having a boiling point in the range from 50°F (10°C) to 300°F (148.9°C). The viscosity range for the first hydrocarbon oil is from 2 cSt (or 32.8 SSU) @ 212°F (2 mm².s⁻¹ @ 100°C) to 15 cSt (or 77.9 SSU) @ 212°F (15 mm².s⁻¹ @ 100°C).

The Figure illustrates the steps involved in the process of this invention. The active slurry catalyst composition is prepared by mixing line 5, containing an oxide of Group VI B metal such as tungsten or molybdenum, and line 7, containing aqueous ammonia, in a mixing zone 10. The temperature of the mixing zone is generally in the range from 80°F (26.7°C) to 200°F (93.3°C), preferably from 100°F (37.8°C) to 150°F (65.6°C), and more preferably from 110°F (43.3°C) to 120°F (48.9°C). The gauge pressure of the mixing zone 10 is generally from atmospheric pressure to 100 psi (0.69 Mpa), preferably from 5 psi (0.035 Mpa) to 35 psi (0.24 Mpa), and more preferably from 10 psi (0.069 Mpa) to 20 psi (0.14 Mpa). The Group VI B metal oxide is dissolved in water containing the ammonia. The amount of ammonia added is based on the ratio of NH₃ to Group Vl B oxide in lbs/lbs (g/g) and generally ranges from 0.1 lbs/lbs (g/g) to 1.0 lbs/lbs (g/g), preferably from 0.15 lbs/lbs (g/g) to 0.50 lbs/lbs (g/g), and more preferably from 0.2 lbs/lbs (g/g) to 0.30 lbs/lbs (g/g). The dissolved metal oxide in aqueous ammonia is moved via line 15 to the first reaction zone.

The amount of hydrogen sulfide (line 9) added to the reaction zone 20 is based on the ratio of H₂S to Group VI B metal oxide in SCF/lbs and may generally range from 8.0 SCF/lbs to 15 SCF/lbs (4.7 x 10⁻⁴ Nm³/g to 8.9 x 10-4 Nm³/g), and more preferably from 12 to 14 SCF/lbs (7.1 x 10⁻⁴ Nm³/g to 8.3 x 10⁻⁴ Nm³/g). The reaction time in the first reaction zone may range from 1 hour to 10 hours, preferably from 3 hours to 8 hours, and most preferably from 4 hours to 6 hours. Conditions include a temperature in the range from 80°F (26.7°C) to 200°F (93.3°C), preferably in the range from 100°F (37.8°C) to 180°F (82.2°C), and more preferably in the range from 130°F (54.4°C) to 160°F (71.1°C). The gauge pressure is in the range from 100 to 3000 psi (0.69 Mpa to 21 Mpa), preferably in the range from 200 to 1000 psi (1.4 Mpa) to 6.9 Mpa), and more preferably from 300 to 500 psi (2.1 Mpa to 3.5 Mpa). The resultant aqueous slurry is the catalyst precursor. The aqueous slurry is combined with a Group VIII metal compound such as Ni or Co, as disclosed in U.S. Patent No. 5,484 755. As an enhancement of the denitrogenation activity of the active slurry catalyst of the present invention, a Group VIII metal compound is added to the slurry before mixing the slurry with feed oil and a hydrogen containing gas at elevated temperature and pressure. Such Group VIII metals are exemplified by nickel and cobalt. It is preferred that the weight ratio of nickel or cobalt to molybdenum range from 1:100 to 1:2. It is more preferred that the weight ratio of nickel to molybdenum range from 1:25 to 1:10, i.e., promoter/molybdenum of 4-10 weight percent. The Group VIII metal, exemplified by nickel, is normally added in the form of the sulfate, and preferably added to the slurry after sulfiding at a pH of 10 or below and preferably at a pH of 8 or below. Group VIII metal nitrates, carbonates or other compounds may also be used. In view of the high activity of the slurry catalyst of the present invention, the further promotion by Group VIII metal compounds is very advantageous.

The aqueous slurry is moved, via line 25, to mixing zone 30. Mixing zone 30 employs an inert atmosphere which can comprise nitrogen, refinery gas, or any other gas having little or no oxygen. The aqueous slurry and a first hydrocarbon oil (line 11), such as VGO, are mixed continuously in a high shear mode to maintain a homogeneous slurry in mixer 30. High shear mixing encompasses a range from 100 RPM to 1600 RPM. Preferably the mixing rate is greater than 500 RPM and more preferably greater than 1500 RPM.

The first hydrocarbon oil has a kinetic viscosity from 2 cSt (or 32.8 SSU) @ 212°F (2 mm².s⁻¹ @ 100°C) to 15 cSt (77.9 SSU) @ 212°F (15 mm².s⁻¹ @ 100°C), preferably from 4 cSt (39.5 SSU) @ 212°F (4 mm².s⁻¹ @ 100°C) to 10 cSt (59.2 SSU) @ 212°F (10 mm².s⁻¹ @ 100°C), and more preferably from 5 cSt (42.7 SSU) @ 212°F (5 mm².s⁻¹ @ 100°C) to 8 cSt (52.4 SSU) @ 212°F (8 mm².s⁻¹ @ 100°C). The first hydrocarbon oil causes the initial transformation of the catalyst precursor to an oil base from a water base. The ratio of Group VI B metal oxide to oil is preferably less than 1.0, preferably less than 0.5, and more preferably less than 0.1. If the kinetic viscosity of the oil is below 2 cSt (or 32.8 SSU) @ 212°F (2 mm².s-¹ @ 100°C) or above 15 cSt (77.9 SSU) (S) 212°F (15 mm².s-' @ 100°C), the first transformation of the catalyst precursor will result in catalyst particles agglomerating or otherwise not mixing.

The material from mixing zone 30 moves to reaction zone 40 via line 35. Prior to entering reaction zone 40, the material may be combined with makeup oil of the viscosity range of the first hydrocarbon oil. Hydrogen is also added to the mixture before it enters reaction zone 40.

In reaction zone 40, a second, lighter hydrocarbon oil is added to the material from mixing zone 30. The second oil, preferably a light naphtha, preferably possesses a kinetic viscosity of less than 0.3 cSt at 212°F (0.3 mm2.s-¹ @ 100°C). One source of this second oil may be recycle material from the high pressure separator 50 (line 45). High shear mixing is also employed in the reaction zone 40 in order to maintain a homogenous slurry.

The second hydrocarbon oil has a boiling point in the range from 50°F (10°C)to 300°F (148.9°C), preferably from 75°F (23.9°C) to 250°F (121.1°C), and more preferably from 100°F (37.8°C) to 150°F (65.6°C). The ratio of the volume of the second oil to the first oil is greater than 1, preferably greater than 5, and more preferably greater than 10. The temperature of the reaction zone 40 ranges from 350°F (176.7°C) to 600°F (315.5°C), and more preferably from 350°F (176.7°C) to 500°F (260°C). The gauge pressure of the reaction zone 40 ranges from 1000 psi to 3500 psi (6.9 Mpa to 24 Mpa), preferably from 1500 psi to 3000 psi (10 Mpa to 21 Mpa), and more preferably from 2000 psi to 3000 psi (14 Mpa to 21 Mpa). The hydrogen flow to the reaction zone 40 may generally range from 500 SCFB to 10,000 SCFB (84.3 Nm³/m³ to 1685 Nm³/m³), preferably from 1000 SCFB to 8000 SCFB (168.5 Nm³/m³ to 1348 Nm³/m³), and more preferably from 3000 SCFB to 6000 SCFB (505.5 Nm³/m³ to 1011 Nm³/m³). The reaction time in the reaction zone 40 may range from 11 minutes to 5 hours, preferably from 30 minutes to 3 hours, and more preferably from 1 hour to 1.5 hours. The resultant slurry mixture is the active catalyst composition in a mixture of the first hydrocarbon oil and the second hydrocarbon oil. The slurry mixture is passed, through line 55, to high pressure separator 50. The high pressure separator may operate in a range from 300°F (148.9°C) to 700°F (371.1°C). The second hydrocarbon oil is removed overhead through line 45 and recirculated back to the reaction zone 40. The active catalyst composition is moved through line 65 to storage tank 60. The active catalyst composition is continuously mixed in storage tank 60 to maintain a homogenous slurry in a hydrogen atmosphere with little or no oxygen. In this way, the catalyst activity and stability are maintained.

The catalyst composition is useful for but not limited to upgrading carbonaceous feedstocks which include atmospheric gas oils, vacuum gas oils, deasphalted oils, olefins, oils derived from tar sands or bitumen, oils derived from coal, heavy crude oils, synthetic oils from Fischer-Tropsch processes, and oils derived from recycled oil wastes and polymers. The catalyst composition is also useful for but not limited to hydrogenation upgrading processes such as thermal hydrocracking, hydrotreating, hydrodesulphurization, hydrodenitrification, and hydrodemetallization.

### EXAMPLES

### Example 1: for catalyst preparation (with light oil)

540 gram MoO₃ is mixed with 79 grams of NH₃ and 2381 grams of H₂O to form a solution of total 3000 grams. The solution is then reacted with 10.71 SCF (0.287 Nm³) of H₂S by passing a gas mixture of 20% H₂S in H₂ into the solution under strong mixing. The reactor temperature is 150°F (65.6°C) and the total gauge pressure is 400 psi (2.8 Mpa), and the reaction time is 4 hours. After reaction, 460 grams NiSO₄ solution which contains 36 grams of Ni is added to the above obtained slurry. The obtained slurry mixture is then mixed with 3500 grams of vacuum gas oil at 100°F (37.8°C). The viscosity of the VGO is 5 cSt @ 212°F (5 mm².s⁻¹ @ 100°C). The resulting mixture is then pumped into a continuously flow stirred tanked reactor (perfectly mixed flow reactor) and mixed with heptane and H₂, the ratio of heptane/VGO is 9:1 and H₂ gas rate is 5000 SCF/B (842.6 Nm³/m³). The reactor gauge pressure is 2500 psi (17 Mpa) and reactor temperature is 400°F (204.4°C), the total reaction time is 1 hour. The reaction products go to a hot high pressure separator with temperature 500°F (260°C) (HPS is also at a gauge pressure of 2500 psi (17 Mpa)) to separate gas and liquid slurry. The obtained liquid slurry contains the highly active catalyst component.

## Claims

1. A process for preparing a slurry catalyst composition suitable for the hydroconversion of heavy oils comprising:
(a) mixing a Group VI B metal oxide and aqueous ammonia to form a Group VI metal compound aqueous mixture;
(b) sulfiding, in a first reaction zone the aqueous mixture of step (a) with a gas comprising hydrogen sulfide to a dosage greater than 8 SCF of hydrogen sulfide per pound of Group VIB metal (4.7 x 10⁻⁴ Nm³/g) to form a slurry;
(c) promoting the slurry with a Group VIII metal;
(d) in a mixing zone mixing the slurry of step (c) with a first hydrocarbon oil under an inert atmosphere and in a high shear mode in the range from 100 RPM to 1600 RPM, the first hydrocarbon oil having a viscosity of from 2 cSt @ 212°F (2 mm².s⁻¹ @ 100°C) to 15 cSt @ 212°F (15 mm².s⁻¹ @ 100°C), to form Mixture X;
(e) moving and combining Mixture X with hydrogen gas and a second hydrocarbon oil in a second reaction zone and mixing in a high shear mode in the range from 100 RPM to 1600 RPM, the second hydrocarbon oil having a boiling point in the range from 50°F (10°C) to 300°F (148.9°C) and having a lower viscosity than the first hydrocarbon oil, thereby forming an active catalyst composition admixed with the first hydrocarbon oil and the second hydrocarbon oil; and
(f) recovering the active catalyst composition by separation from the second hydrocarbon oil;
wherein the conditions in the first reaction zone comprise a temperature in the range from at least 80°F (26.7°C) to 200°F (93.3°C), and a gauge pressure in the range from at least 100 psi to 3000 psi (0.69 - 20.7 Mpa);
and wherein the conditions of the second reaction zone comprise a temperature in the range from at least 350°F (176.7°C) to 600°F (315.6°C), and a gauge pressure in the range from at least 1000 psi to 3500 psi (6.89 - 24.1 MPa);
and wherein the ratio of the volume of the second oil to the first oil is greater than 1.

2. The process of claim 1, wherein conditions in the first reaction zone comprise a temperature in the range from at least 100°F (37.8°C) to 180°F (82.2°C), and a gauge pressure in the range from at least 200 psi to 1000 psi (1.38 - 6.89 Mpa).

3. The process of claim 2, wherein conditions in the first reaction zone comprise a temperature in the range from at least 130°F (54.4°C) to 160°F (71.1°C), and a gauge pressure in the range from at least 300 psi to 500 psi (2.07 - 3.45 Mpa).

4. The process of claim 1, wherein the first hydrocarbon oil viscosity ranges from 4 cSt @ 212°F (4 mm².s⁻¹ @ 100°C) to 10 cSt @ 212°F (10 mm².s⁻¹ @ 100°C).

5. The process of claim 1, wherein the Group VIII metal compound of step (c) is selected from the group consisting of nickel sulfates and cobalt sulfates.

6. The process of claim 5, wherein the Group VI B metal oxide is molybdenum oxide, and in the catalyst composition the weight ratio of nickel or cobalt to molybdenum ranges from 1:100 to 1:2.

7. The process of claim 1, wherein the second hydrocarbon oil boils in the range from at least 75°F (23.9°C) to 250°F (121.1°C).

8. The process of claim 1, wherein the ratio of the volume of the second oil to the first oil is greater than 5.

9. The process of claim 1, wherein the ratio of the volume of the second oil to the first oil is greater than 10.

10. The process of claim 1, wherein the first hydrocarbon oil is a vacuum gas oil.

11. The process of claim 1, wherein the second hydrocarbon oil possess a kinetic viscosity of less than 0.3 cSt at 212°F (0.3 mm².s⁻¹ @ 100°C).

12. The process of claim 1, wherein the second hydrocarbon oil is a light naphtha.

13. The process of claim 1, wherein the conditions of the second reaction zone comprise a temperature in the range from at least 350°F (176.6°C) to 600°F (315.6°C), and the gauge pressure in the range from at least 1500 psi to 3000 psi (10.3 - 20.7 MPa).

14. The process of claim 1, wherein the active slurry catalyst is recovered by means of a high pressure separator.

15. The process of claim 1, wherein the active slurry catalyst is stored and continuously mixed in a storage tank to maintain a homogenous slurry in a hydrogen atmosphere with no oxygen.

## Patentansprüche

1. Herstellungsverfahren für eine Aufschlämmungskatalysator-Zusammensetzung, geeignet für die Hydrokonversion von Schwerölen, umfassend
(a) Vermischen eines Oxyds eines Metalls der Gruppe VI B und wässrigen Ammoniaks zum Bilden eines wässrigen Gemischs einer Verbindung eines Metalls der Gruppe VI;
(b) Sulfidieren, in einer ersten Reaktionszone, des wässrigen Gemischs aus Schritt (a) mit einem Gas, umfassend Wasserstoffsulfid mit einer Dosierung größer als 8 SCF Wasserstoffsulfid pro Pfund Metall der Gruppe VIB (4,7 × 10⁻⁴ Nm³/g) zum Bilden einer Aufschlämmung;
(c) Anreichern der Aufschlämmung mit einem Metall der Gruppe VIII;
(d) in einer Mischzone, Vermischen der Aufschlämmung aus Schritt (c) mit einem ersten Kohlenwasserstofföl unter einer inerten Atmosphäre und in einem Modus mit hohem Scherwert im Bereich von 100 RPM bis 1600 RPM, wobei das erste Kohlenwasserstofföl eine Viskosität von 2 cSt @ 212°F (2 mm².s⁻¹ @ 100°C) bis 15 cSt @ 212°F (15 mm².s⁻¹ @ 100°C) hat, zum Bilden eines Gemischs X;
(e) Bewegen und Kombinieren des Gemischs X mit Wasserstoffgas und einem zweiten Kohlenwasserstofföl in einer zweiten Reaktionszone und Vermischen in einem Modus mit hohem Scherwert im Bereich von 100 RPM bis 1600 RPM, wobei das zweite Kohlenwasserstofföl einen Siedepunkt im Bereich von 50°F (10°C) bis 300°F (148,9°C) hat und mit einer geringeren Viskosität als das erste Kohlenwasserstofföl, um so eine aktive Katalysatormischung zu bilden, zugemischt zum ersten Kohlenwasserstofföl und zum zweiten Kohlenwasserstofföl; und
(f) Wiedergewinnen der aktiven Katalysatormischung durch Abtrennen vom zweiten Kohlenwasserstofföl;
wobei die Bedingungen in der ersten Reaktionszone umfassen eine Temperatur im Bereich von mindestens 80°F (26,7°C) bis 200°F (93,3°C), und einen Überdruck im Bereich von mindestens 100 psi bis 3000 psi (0,69 bis 20,7 MPa);
und wobei die Bedingungen in der zweiten Reaktionszone umfassen eine Temperatur im Bereich von mindestens 350°F (176,7°C) bis 600°F (315,6°C), und einen Überdruck im Bereich von mindestens 1000 psi bis 3500 psi (6,89 bis 24,1 MPa);
und wobei das Verhältnis zwischen dem Volumen des zweiten Öls zum ersten Öl größer als 1 ist.

2. Verfahren gemäß Anspruch 1, wobei Bedingungen in der ersten Reaktionszone umfassen eine Temperatur im Bereich von mindestens 100°F (37,8°C) bis 180°F (82,2°C), und einen Überdruck im Bereich von mindestens 200 psi bis 1000 psi (1,38 bis 6,89 MPa).

3. Verfahren gemäß Anspruch 2, wobei Bedingungen in der ersten Reaktionszone umfassen eine Temperatur im Bereich von mindestens 130°F (54,4°C) bis 160°F (71,1°C), und einen Überdruck im Bereich von mindestens 300 psi bis 500 psi (2,07 bis 3,45 MPa).

4. Verfahren gemäß Anspruch 1, wobei die Viskosität des ersten Kohlenwasserstofföls im Bereich von 4 cSt @ 212°F (4 mm²·s⁻¹ @ 100°C) bis 10 cSt @ 212°F (10 mm²·s⁻¹ @ 100°C) ist.

5. Verfahren gemäß Anspruch 1, wobei die Verbindung des Metalls der Gruppe VIII in Schritt (c) ausgewählt ist aus der Gruppe Nickelsulfate und Cobaltsulfate.

6. Verfahren gemäß Anspruch 5, wobei das Metalloxyd der Gruppe VI B Molybdänoxyd ist, und in der Katalysatorzusammensetzung das Gewichtsverhältnis von Nickel oder Cobalt zu Molybdän im Bereich von 1:100 bis 1:2 ist.

7. Verfahren gemäß Anspruch 1, wobei das zweite Kohlenwasserstofföl im Bereich von mindestens 75°F (23,9°C) bis 250°F (121,1°C) siedet.

8. Verfahren gemäß Anspruch 1, wobei das Verhältnis zwischen dem Volumen des zweiten Öls zum ersten Öl größer als 5 ist.

9. Verfahren gemäß Anspruch 1, wobei das Verhältnis zwischen dem Volumen des zweiten Öls zum ersten Öl größer als 10 ist.

10. Verfahren gemäß Anspruch 1, wobei das erste Kohlenwasserstofföl Vakuumgasöl ist.

11. Verfahren gemäß Anspruch 1, wobei das zweite Kohlenwasserstofföl eine kinetische Viskosität geringer als 0,3 cSt bei 212°F (0,3 mm²·s⁻¹ @ 100°C) hat.

12. Verfahren gemäß Anspruch 1, wobei das zweite Kohlenwasserstofföl ein leichtes Naphtha ist.

13. Verfahren gemäß Anspruch 1, wobei die Bedingungen in der zweiten Reaktionszone umfassen eine Temperatur im Bereich von mindestens 350°F (176,6°C) bis 600°F (315,6°C), und einen Überdruck im Bereich von mindestens 1500 psi bis 3000 psi (10,3 bis 20,7 MPa).

14. Verfahren gemäß Anspruch 1, wobei der aktive Aufschlämmungskatalysator wiedergewonnen wird mit Hilfe eines Hochdruckseparators.

15. Verfahren gemäß Anspruch 1, wobei die aktive Aufschlämmungskatalysator in einem Lagertank gelagert und kontinuierlich vermischt wird, um eine homogene Aufschlämmung in einer Wasserstoffatmosphäre ohne Sauerstoff zu erhalten.

## Revendications

1. Procédé de production pour une composition de catalyseur en forme d'une boue, adapté à l'hydroconversion du pétrole brut lourd, comprenant :
(a) mélanger un oxyde d'un métal du Groupe VI B et de l'ammoniaque aqueux pour former un mélange aqueux d'un composé de métal du groupe VI ;
(b) sulfurer, dans une première zone de réaction, le mélange aqueux de l'étape (a) avec un gaz comprenant du sulfure d'hdyrogène avec un dosage supérieur à 8 SCF de sulfure d'hydrogène par livre de métal du Groupe VIB (4,7 × 10⁻⁴ Nm³/g) pour former une boue ;
(c) promouvoir la boue avec un métal du Groupe VIII ;
(d) dans une zone de mélange, mélanger la boue de l'étape (c) avec une première huile d'hydrocarbure dans une atmosphère inerte et en mode de cisaillement élevé dans l'intervalle de 100 tr/min à 1600 tr/min, la première huile d'hydrocarbure ayant une viscosité de 2 cSt @ 212°F (2 mm²·s⁻¹ @ 100°C) à 15 cSt @ 212°F (15 mm²·s⁻¹ @ 100°C), pour former un Mélange X ;
(e) déplacer et combiner le Mélange X avec du gaz d'hydrogène et une deuxième huile d'hydrocarbure dans une deuxième zone de réaction et mélanger en mode de cisaillement élevé dans l'intervalle de 100 tr/min à 1600 tr/min, la deuxième huile d'hydrocarbure ayant un point d'ébullition dans l'intervalle de 50°F (10°C) à 300°F (148,9°C), et ayant une viscosité inférieure à celle de la première huile d'hydrocarbure, pour ainsi former une composition de catalyseur actif ajoutée à la première huile d'hydrocarbure et la deuxième huile d'hydrocarbure ; et
(f) recouvrir la composition de catalyseur actif par séparation de la deuxième huile d'hydrocarbure ;
où les conditions dans la première zone de réaction comprennent une température dans l'intervalle d'au moins 80°F (26,7°C) à 200°F (93,3°C), et une pression manométrique entre au moins 100 psi à 3000 psi (0,69 à 20,7 MPa) ;
et où les conditions de la deuxième zone de réaction comprennent une température dans l'intervalle d'au moins 350°F (176,7°C) à 600°F (315,6°C), et une pression manométrique entre au moins 1000 psi à 3500 psi (6,89 à 24,1 MPa) ;
et où le rapport du volume de la deuxième huile à la première huile est supérieur à 1.

2. Procédé selon la revendication 1, dans lequel des conditions dans la première zone de réaction comprennent une température dans l'intervalle d'au moins 100°F (37,8°C) à 180°F (82,2°C), et une pression manométrique entre au moins 200 psi à 1000 psi (1,38 à 6,89 MPa).

3. Procédé selon la revendication 2, dans lequel des conditions dans la première zone de réaction comprennent une température dans l'intervalle d'au moins 130°F (54,5°C) à 160°F (71,1°C), et une pression manométrique entre au moins 300 psi à 500 psi (2,07 à 3,45 MPa).

4. Procédé selon la revendication 1, dans lequel la viscosité de la première huile d'hydrocarbure est dans l'intervalle de 4 cSt @ 212°F (4 mm²·s⁻¹ @ 100°C) à 10 cSt @ 212°F (10 mm²·s⁻¹ @ 100°C).

5. Procédé selon la revendication 1, dans lequel le composé de métal du Groupe VIII dans l'étape (c) est sélectionné parmi le groupe constitué en sulfates de nickel et sulfates de cobalt.

6. Procédé selon la revendication 5, dans lequel l'oxyde du métal du Groupe VI B est l'oxyde de molybdène, et dans la composition de catalyseur, le rapport en poids entre nickel ou cobalt et molybdène est dans l'intervalle de 1:100 à 1:2.

7. Procédé selon la revendication 1, dans lequel la deuxième huile d'hydrocarbure bout dans l'intervalle d'au moins 75°F (23,9°C) à 250°F (121,1°C).

8. Procédé selon la revendication 1, dans lequel le rapport volumique entre la deuxième huile d'hydrocarbure et la première huile d'hydrocarbure est supérieur à 5.

9. Procédé selon la revendication 1, dans lequel le rapport volumique entre la deuxième huile d'hydrocarbure et la première huile d'hydrocarbure est supérieur à 10.

10. Procédé selon la revendication 1, dans lequel la première huile d'hydrocarbure est un gazole sous vide.

11. Procédé selon la revendication 1, dans lequel la deuxième huile d'hydrocarbure a une viscosité cinétique de moins de 0,3 cSt à 212°F (0,3 mm²·s⁻¹ @ 100°C).

12. Procédé selon la revendication 1, dans lequel la deuxième huile d'hydrocarbure est un naphtha léger.

13. Procédé selon la revendication 1, dans lequel les conditions dans la deuxième zone de réaction comprennent une température dans l'intervalle d'au moins 350°F (176,6°C) à 600°F (315,6°C), et une pression manométrique entre au moins 1500 psi à 3000 psi (10,3 à 20,7 MPa).

14. Procédé selon la revendication 1, dans lequel le catalyseur actif en forme d'une boue est recouvert à l'aide d'un séparateur à pression élevée.

15. Procédé selon la revendication 1, dans lequel le catalyseur actif en forme d'une boue est stocké et mélangé continuellement dans un tank de stockage pour maintenir une boue homogène dans une atmosphère d'hydrogène sans oxygène.
